# EUROPEAN PATENT SPECIFICATION

(11) **EP 4 662 645 B1**
(45) Date of publication and mention of the grant of the patent: **16.09.2026**
(21) Application number: 23844297.4
(22) Date of filing: 11.12.2023
(51) Int. Cl.: G06V 20/58, G06V 20/56, G06V 20/59

(54) **CAMERA MONITOR SYSTEM WITH CURVE CUT ALERT**
KAMERAÜBERWACHUNGSSYSTEM MIT KURVENSCHNITTWARNUNG
SYSTÈME DE SURVEILLANCE DE CAMÉRA AVEC ALERTE DE COUPURE DE COURBE

(30) Priority: 02.03.2023 US 202318116627
(43) Date of publication of application: 17.12.2025
(73) Proprietor: Stoneridge Electronics AB, 16903 Solna (SE)
(72) Inventor: MA, Liang, Rochester, Michigan 48306 (US); COOPRIDER, Troy, White Lake, Michigan 48386 (US); SHARMA, Utkarsh, Farmington Hills, Michigan 48334 (US)
(74) Representative: Marks & Clerk LLP
(86) International application number: PCT/US2023/083421
(87) International publication number: WO 2024/182034

(56) References cited:
- US-A1- 2017 247 054
- US-A1- 2018 068 566
- US-A1- 2019 375 399
- LJUNGQVIST OSKAR: "On motion planning and control for truck and trailer systems", 1 January 2019 (2019-01-01), pages 1 - 99, XP093132250, ISBN: 978-91-7-685130-2, Retrieved from the Internet <URL:https://books.googleusercontent.com/books/content?req=AKW5QadWHGJ7WbwjKRxsogqk9IggXVdLcBMNSKxLNXT-gMyO3RAL7k6jsA5UvRW93owGnp4cygu-1X4e2aALOFjKkD4WSWtQ8Jj9N0MGpWFGZN4fpsV3FF6m4JakeK6NQaTpgjkFHz589WEkRKiAiqZAsYzhfWJOPI7nejpPj203y33KTYqnWJEl7Csa4fvcaDewVwFuDqUnU8X50ScgSLWK7vWWP52YxxGv6SeXbjkoaOx_5u6uJf> [retrieved on 20240216]
- YANG JUNGGUN ET AL: "Development of a Unified Lane-Keeping and Collision Avoidance System for Semi-Trailer Truck", IEEE ACCESS, IEEE, USA, vol. 8, 12 August 2020 (2020-08-12), pages 149751 - 149763, XP011806864, DOI: 10.1109/ACCESS.2020.3016497

## Description

### PRIORITY CLAIM

This application claims priority to United States Patent Application Serial No. 18/116,627 filed on March 2, 2023, entitled "TRAILER STRIKING PREDICTION USING CAMERA MONITORING SYSTEM".

### TECHNICAL FIELD

This disclosure relates to a camera monitor system (CMS) for use in a tractor pulling a trailer, and in particular to a system for increasing driver awareness during a turning operation.

### BACKGROUND

Mirror replacement systems, and camera systems for supplementing mirror views, are utilized in commercial vehicles to enhance the ability of a vehicle operator to see a surrounding environment. Camera monitor systems (CMS) utilize one or more cameras disposed about the vehicle to provide an enhanced field of view to a vehicle operator on one or more displays located in the vehicle cabin. In some examples, mirror replacement systems within the CMS can cover a larger field of view than a conventional mirror, or can include views that are not fully obtainable via a conventional mirror.

Forward turning operations of commercial tractor trailer configurations require a wider turn than other vehicles in order to prevent the side of the trailer from inadvertently striking objects on the inside of the turn arc. Even when the inside portion of the turn is visible via mirrors and/or camera monitor systems, it can be difficult for less experienced operators to gauge the motion of the side of the trailer using only the conventional views.

US 2017/247054 A1 describes a method for providing a warning that a trailer being towed by a vehicle will cross out of a travel lane when in a curve for the current vehicle path prior to the vehicle entering the curve.

US 2019/375399 A1 describes examples of techniques for controlling a vehicle based on trailer position.

Oskar Ljungqvist's thesis titled "On motion planning and control for truck and trailer systems", 2019, ISBN 978-91-7685-130-2, describes motion planning and feedback control frameworks for truck and trailer systems composed of several interconnected modules.

Typically, vehicle operators compensate for the difficulty by using unnecessarily wide turns to ensure that objects on the inside of the turn are not struck by the trailer.

### SUMMARY

In one aspect of the present invention, a camera monitor system (CMS) for a vehicle is defined herein in accordance with independent claim 1.

In a further embodiment of any of the above, the overlay is configured to increase in intensity based upon a severity level.

In a further embodiment of any of the above, the overlay is an indicium, and the severity level dictates a flash rate of the indicium.

In a further embodiment of any of the above, the overlay is an indicium, and the severity level dictates a color of the indicium.

In a further embodiment of any of the above, the severity level is based upon at least one of a time until the imminent intersection and a time until a collision with a vehicle in an adjoining lane of the vehicle.

In a further embodiment of any of the above, the lane marking identification algorithm is configured to determine the lane marking by filtering a color of the lane marking from a surrounding portion of the captured image.

In a further embodiment of any of the above, the controller includes a kinematic module that includes a bicycle model that is indicative of a trailer predicted path. The trailer detection module determines the trailer boundary based upon the trailer predicted path.

In a further embodiment of any of the above, the bicycle model is a second bicycle model, and the controller includes a first bicycle model that is indicative of a tractor predicted path. The second bicycle model is connected to the first bicycle model by a hitch point. The first bicycle model includes Ackerman steering.

In a further embodiment of any of the above, the controller is configured to receive a steering angle and a vehicle speed, and the trailer predicted path is based upon the steering angle and the vehicle speed.

In a further embodiment of any of the above, the trailer feature is at least one trailer wheel.

In a further embodiment of any of the above, the trailer feature is at least one trailer edge line.

In another aspect of the present invention, a method of monitoring a trailer of a vehicle is defined herein in accordance with independent claim 11.

In a further embodiment of any of the above, the overlay is configured to increase in intensity based upon a severity level. The severity level is based upon at least one of a time until the imminent intersection and a time until a collision with a vehicle in an adjoining lane of the vehicle.

In a further embodiment of any of the above, the identifying is performed by at least one of filtering a color of the lane marking and deep learning from a surrounding portion of the captured image.

In a further embodiment of any of the above, the trailer boundary detecting step includes using a kinematics model with a first bicycle model that is indicative of a tractor predicted path. A second bicycle model is connected to the first bicycle model by a hitch point. The first bicycle model includes Ackerman steering, and the second bicycle model is indicative of the trailer predicted path. The kinematics model is configured to receive a steering angle and a vehicle speed, and the trailer predicted path is based upon the steering angle and the vehicle speed.

In a further embodiment of any of the above, the trailer feature includes at least one of at least one trailer wheel and at least one trailer edge line.

### BRIEF DESCRIPTION OF THE DRAWINGS

The disclosure can be further understood by reference to the following detailed description when considered in connection with the accompanying drawings wherein:
Figure 1A is a schematic front view of a commercial truck with a camera monitor system (CMS) used to provide at least Class II and Class IV views.
Figure 1B is a schematic top elevational view of a commercial truck with a camera mirror system providing Class II, Class IV, Class V, Class VI and Class VIII views.
Figure 2 is a schematic illustration of an interior of a vehicle cab and the CMS system.
Figure 3 depicts a kinematics model for each of the tractor and trailer.
Figure 4 depicts a bird's eye view of tractor and trailer striking areas based upon the kinematics model of Figure 3.
Figures 5A-5C schematically illustrate a commercial truck turning maneuver at a start (Figure 3A), a middle (Figure 3B) and end (Figure 3C) of a forward moving turning maneuver.
Figure 6 illustrates a method for providing trailer striking area collision warnings using the CMS.
Figure 7 schematically illustrates a predicted striking area of a trailer.
Figure 8 illustrates a detailed method for generating the trailer striking area of Figure 6 and using the same to generate an overlay.
Figure 9 is a flowchart of the various functionalities performed in the CMS.
Figure 10 is a bird's eye view of the vehicle traveling along a curved highway in traffic.
Figures 11A-11B are respectively driver and passenger fields of view provided on the CMS displays for the vehicle position shown in Figure 10.
Figure 12A-12B are respectively driver and passenger fields of view provided on the CMS displays for the vehicle position shown in Figure 3B.
Figures 13A-13C are alternative overlays to the overlay shown in Figure 12B.

The embodiments, examples and alternatives of the preceding paragraphs, the claims, or the following description and drawings, including any of their various aspects or respective individual features, may be taken independently or in any combination. Features described in connection with one embodiment are applicable to all embodiments, unless such features are incompatible.

### DETAILED DESCRIPTION

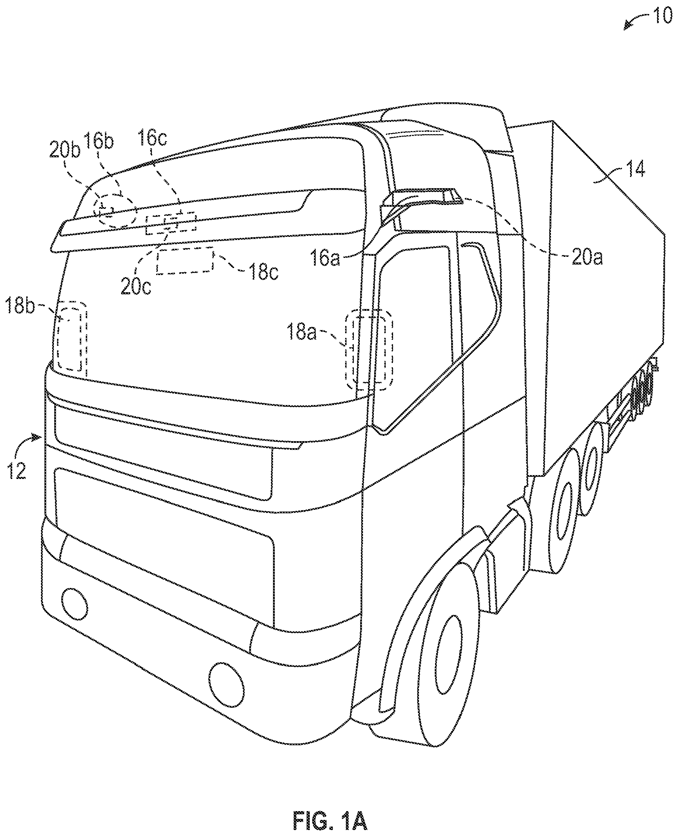

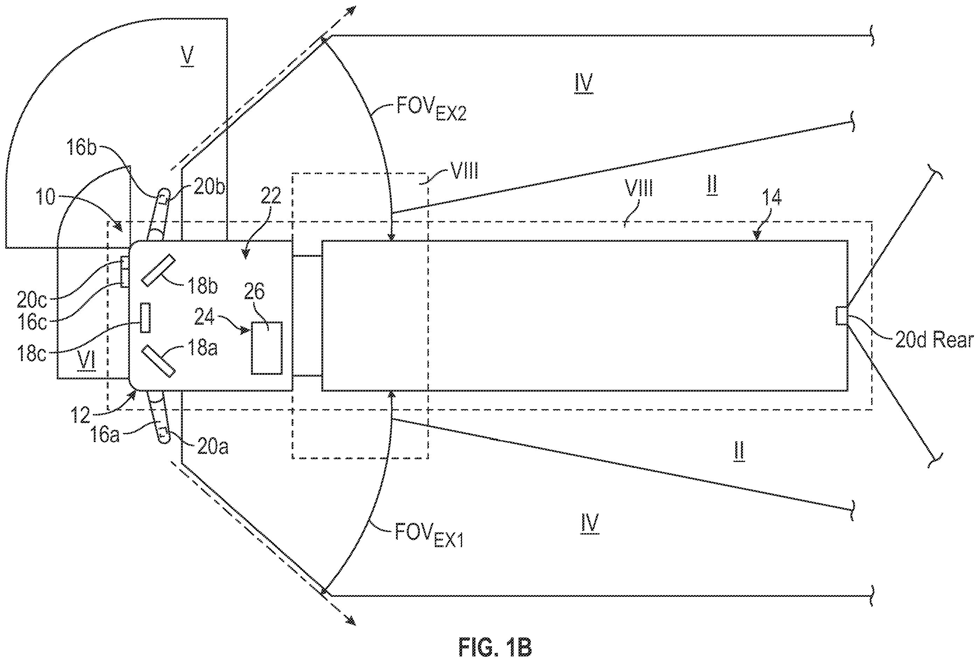

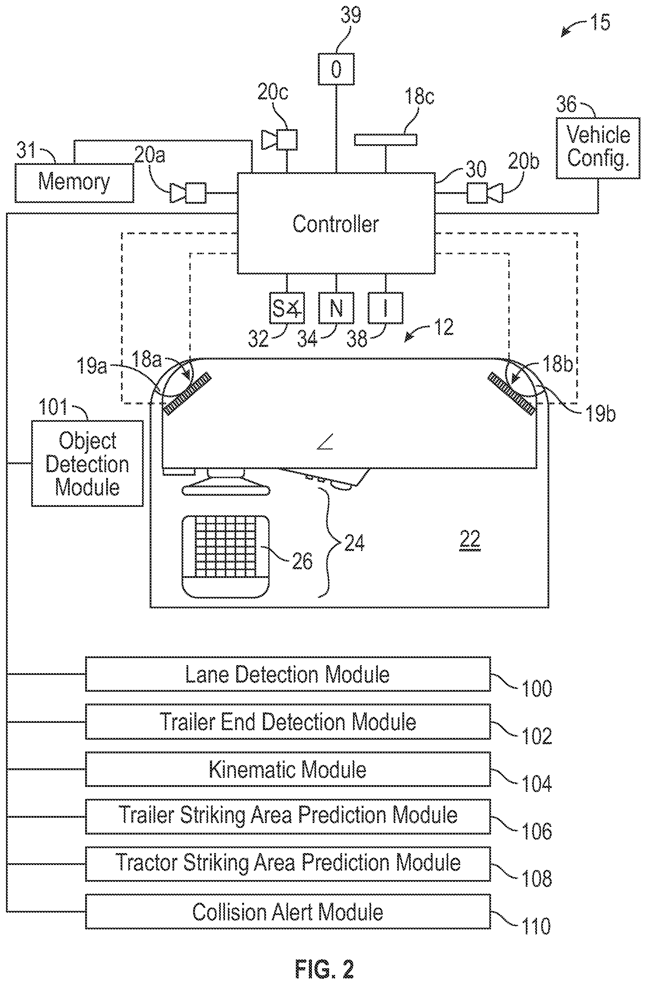

A schematic view of a commercial vehicle 10 is illustrated in Figures 1A and 1B. Figure 2 is a schematic top perspective view of the vehicle 10 cabin including displays and interior cameras. The vehicle 10 includes a vehicle cab or tractor 12 for pulling a trailer 14. It should be understood that the vehicle cab 12 and/or trailer 14 may be any configuration. Although a commercial truck is contemplated in this disclosure, the invention may also be applied to other types of vehicles. The vehicle 10 incorporates a camera monitor system (CMS) 15 (Fig. 2) that has driver and passenger side camera arms 16a, 16b (generally, "camera arm 16" or "wing") mounted to the outside of the vehicle cab 12. If desired, the camera arms 16a, 16b may include conventional mirrors integrated with them as well, although the CMS 15 can be used to entirely replace mirrors. In additional examples, each side can include multiple camera arms, each arm housing one or more cameras and/or mirrors.

Each of the camera arms 16a, 16b includes a base that is secured to, for example, the cab 12. A pivoting arm is supported by the base and may articulate relative thereto. Fixed wings may also be used. At least one rearward facing camera 20a, 20b is arranged respectively within camera arms. The exterior cameras 20a, 20b each have an image capture unit that capture an exterior field of view FOV_{EX1}, FOV_{EX2} that each include at least one of the Class II and Class IV views (Fig. 1B), which are legal prescribed views in the commercial trucking industry. It is desirable to capture at least a portion of the trailer 14 in the field of view, for example, the side and/or end of the trailer, throughout vehicle operation. Multiple cameras also may be used in each camera arm 16a, 16b to provide these views, if desired. Class II and Class IV views are defined in European R46 legislation, for example, and the United States and other countries have similar drive visibility requirements for commercial trucks. Any reference to a "Class" view is not intended to be limiting, but is intended as exemplary for the type of view provided to a display by a particular camera. Each arm 16a, 16b may also provide a housing that encloses electronics that are configured to provide various features of the CMS 15.

First and second video displays 18a, 18b are arranged on each of the driver and passenger sides within the vehicle cab 12 on or near the A-pillars 19a, 19b to display Class II (narrow angle view) and Class IV (wide angle view) views (e.g., Class II depicted above Class IV in a portrait-style configuration) on its respective side of the vehicle 10, which provide rear facing side views along the vehicle 10 (e.g., portions of the trailer) that are captured by the exterior cameras 20a, 20b.

If video of Class V and/or Class VI views are also desired, a camera housing 16c and camera 20c may be arranged at or near the front of the vehicle 10 to provide those views (Fig. 1B). A third display 18c arranged within the cab 12 near the top center of the windshield can be used to display the Class V and Class VI views, which are toward the front of the vehicle 10, to the driver. The displays 18a, 18b, 18c face a driver region 24 within the cabin 22 where an operator is seated on a driver seat 26. The location, size and field(s) of view streamed to any particular display may vary from the configurations described in this disclosure and still incorporate the disclosed invention.

If video of Class VIII views is desired, camera housings can be disposed at the sides and rear of the vehicle 10 to provide fields of view including some or all of the Class VIII zones of the vehicle 10. As illustrated, the Class VIII view includes views immediately surrounding the trailer, and in the rear proximity of the vehicle including the rear of the trailer. In one example, a view of the rear proximity of the vehicle is generated by a rear facing camera disposed at the rear of the vehicle, and can include both the immediate rear proximity and a traditional rear view (e.g. a view extending rearward to the horizon, as may be generated by a rear view mirror in vehicles without a trailer). In such examples, the third display 18c can include one or more frames displaying the Class VIII views. Alternatively, additional displays can be added near the first, second and third displays 18a, 18b, 18c (generally, "display 18") and provide a display dedicated to providing a Class VIII view.

In some cases, the Class VIII view is generated using a trailer mounted camera 30. The trailer mounted camera 20d is a rear facing camera which provides a field of view behind the trailer. This rear view can be provided to one of the displays 18a, 18b and/or another display 18c within the vehicle cabin 22 as a rear view mirror replacement or as a rear view mirror supplement. This view is particularly beneficial as the trailer 14 may block some, or all, views provided by a conventional rear view mirror.

The CMS 15 is also configured to utilize the images from the cameras 20a, 20b, 20c, 20d (generally, "camera 20") as well as images from other cameras that may be disposed about the vehicle or in communication with the vehicle to determine features of the vehicle, identify objects, and facilitate driver assistance features such as display overlays and semi-automated driver assistance systems.

These features and functions of the CMS 15 are used to implement multiple CMS 15 systems that aid in operation of the vehicle. It should be noted that a controller 30 (Fig. 2) for the CMS 15 can be used to implement the various functionalities disclosed in this application. The controller 30, which is in communication with the displays 18 and cameras 20, may include one or more discrete units. For example, a centralized architecture may have a common controller arranged in the vehicle 10, while a decentralized architecture may use a controller provided in each of the displays 18, for example. Moreover, a portion of the controller 30 may be provided in the vehicle 10, while another portion of the controller 30 may be located elsewhere, for example, the camera arms 16. In another example, a master-slave display configuration may be used where one display includes the controller 30 while the other display receives the commands from the controller 30.

In terms of hardware architecture, such a controller can include a processor, memory (e.g., memory 31, Fig. 2), and one or more input and/or output (I/O) device interface(s) that are communicatively coupled via a local interface. The local interface can include, for example but not limited to, one or more buses and/or other wired or wireless connections. The local interface may have additional elements, which are omitted for simplicity, such as controllers, buffers (caches), drivers, repeaters, and receivers to enable communications. Further, the local interface may include address, control, and/or data connections to enable appropriate communications among the aforementioned components.

The controller 30 may be a hardware device for executing software, particularly software stored in memory (e.g., memory 31, Fig. 2). The controller 30 can be a custom made or commercially available processor, a central processing unit (CPU), an auxiliary processor among several processors associated with the controller, a semiconductor-based microprocessor (in the form of a microchip or chip set) or generally any device for executing software instructions.

The memory 31 can include any one or combination of volatile memory elements (e.g., random access memory (RAM, such as DRAM, SRAM, SDRAM, VRAM, etc.)) and/or nonvolatile memory elements (e.g., ROM, hard drive, tape, CD-ROM, etc.). Moreover, the memory 31 may incorporate electronic, magnetic, optical, and/or other types of storage media. The memory 31 can also have a distributed architecture, where various components are situated remotely from one another, but can be accessed by the processor.

The software in the memory 31 may include one or more separate programs, each of which includes an ordered listing of executable instructions for implementing logical functions. A system component embodied as software may also be construed as a source program, executable program (object code), script, or any other entity comprising a set of instructions to be performed. When constructed as a source program, the program is translated via a compiler, assembler, interpreter, or the like, which may or may not be included within the memory 31.

The disclosed input and output devices that may be coupled to system I/O interface(s) may include input devices, for example but not limited to, a keyboard, mouse, scanner, microphone, camera, mobile device, proximity device, etc. Further, the output devices, for example but not limited to, a printer, display, etc. Finally, the input and output devices may further include devices that communicate both as inputs and outputs, for instance but not limited to, a modulator/demodulator (modem; for accessing another device, system, or network), a radio frequency (RF) or other transceiver, a telephonic interface, a bridge, a router, etc.

When the controller 30 is in operation, the processor can be configured to execute software stored within the memory 31, to communicate data to and from the memory 31, and to generally control operations of the computing device pursuant to the software. Software in memory 31, in whole or in part, is read by the processor, perhaps buffered within the processor, and then executed.

In various examples, the controller 30 includes one or modules having algorithm(s), equation(s) and/or decision manager(s) that receive input(s) from sensors and/or stored values. Example modules include Lane Detection Module 100, Object Detection Module 101, Trailer End Detection Module 102, Kinematic Module 104, Trailer Striking Area Prediction Module 106, Tractor Striking Area Prediction Module 108, and Collision Alert Module 110. Example inputs include a steering angle sensor 32, a vehicle speed sensor 34, and other sensor data. Vehicle configuration information 36, which relates to vehicle characteristics (e.g., trailer length, axle position, trailer type/wheelbase, tractor configuration/wheelbase, hitch point location etc.), provided by the manufacturer, operator, and/or determined by one or more of the modules. During vehicle operation, the controller 30 may communicate information to the driver, fleet operator, or others using an output 39 (e.g, displays 18, speaker, etc.).

The object detection module 101 includes one or more image processing algorithms configured to identify objects in the captured images. The algorithms may be used to identify VRU's (e.g., pedestrians or cyclists), attributes of the tractor 12 and/or trailer 14, other vehicles, signs, curbs, trees, buildings and/or other inanimate objects.

The lane detection module 100 also uses image processing of the captured images to identify markings on the roadway, such as lane markers that visually divide adjacent lanes. One example algorithm is described in United States Publication No. US2023/117,719, entitled "CAMERA MIRROR SYSTEM DISPLAY FOR COMMERCIAL VEHICLES INCLUDING SYSTEM FOR IDENTIFYING ROAD MARKINGS". In that publication, a lane detection module is described in which an object detection algorithm identifies a lane marking in a roadway by filtering a color of the lane marking from a surrounding portion of the captured image. Other techniques based upon deep learning technology or another computer vision method may be used, if desired.

The trailer end detection module 102 is another image processing module that extracts one or more trailer features from the captured images to determine the location of the end of the trailer in 3D space. These extracted attributes can be used to detect objects such as tractor wheels, trailer edges and other features. Example wheel detection algorithm techniques are disclosed in United States Publication No. US2023/202,394 entitled "CAMERA MONITOR SYSTEM FOR COMMERCIAL VEHICLES INCLUDING WHEEL POSITION ESTIMATION". Example trailer edge detection algorithm techniques are disclosed in United States Publication No. US2023/125,045 entitled "TRAILER END TRACKING IN CAMERA MONITORING SYSTEM". Other techniques may be used, if desired.

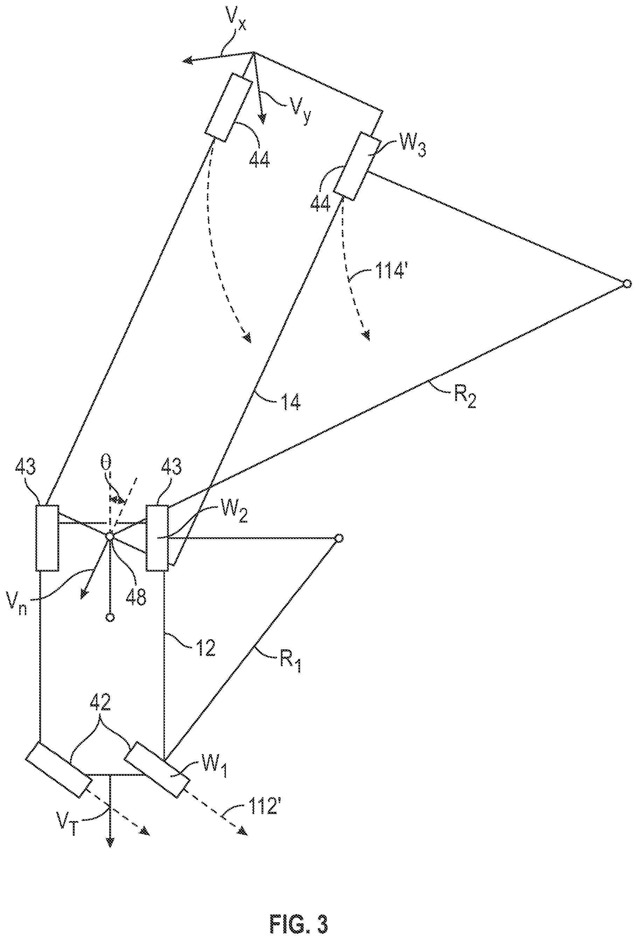

Many of the described functions utilize a kinematic model (provided by the kinematics module 104) to determine where one or more features on the tractor 12 and/or trailer 14 are currently located or predicted to be located. The kinematic model, schematically illustrated in Figure 3, models a tractor rotational radius R₁ and a trailer rotational radius R₂ and separate, different radii. The tractor 12 has front wheels 42 and rear wheels 43. The kinematics model models the front wheels 42 in a manner that takes into consideration its Ackerman steering characteristics, which is a common steering geometry approach that allows the outside and inside wheels to travel in different radial paths to reduce tire scrub. The trailer 14, which is connected to the tractor 12 at a hitch point (i.e., fifth wheel), has rear wheels 44. V_{T} is the tractor velocity (corresponding to vehicle speed N, at 34 in Fig. 2), and Vₙ is the trailer velocity in its longitudinal direction. Vy is the velocity of the trailer end in the same direction as the tractor direction of travel, and Vx is the velocity component of the trailer end in a direction transverse to Vy. The trailer angle θ, which is the angle between the trailer 14 and the tractor 12, can be determined in a variety suitable approaches. Trailer angle is calculated with kinematic model during forward driving and is estimated with image processing method during reverse driving. Another method may use LiDAR point cloud to calculate trailer angle and dimensions. Still another method could be a relative/absolute angular position sensor mounted at the hitch location.

The kinematics model of the vehicle 10 is simplified by using two bicycle, or half-track, models. That is, all wheels need not be represented in the model. Said another way, the bicycle model, which is used as kinematics model in the Kinematic Module 104 is a simplified representation of a four wheeled vehicle. Just the inside wheels of a turning maneuver can be modeled, as that is the side of the vehicle 10 that is most at risk of a collision. It is used to predict the pose of the vehicle 10 using the instantaneous position, angles, velocities and accelerations acting on/in the system. Additionally, it is assumed in this kinematics model that all slip angles are zero. As a result, a vehicle component's (e.g., wheel location and/or trailer end) speed and future displacement can be propagated through the mathematical algorithm very quickly. Additionally, only the trailer angle, the vehicle speed and the steering angle are needed as inputs, which provides a simple, precise, quick approach to path prediction.

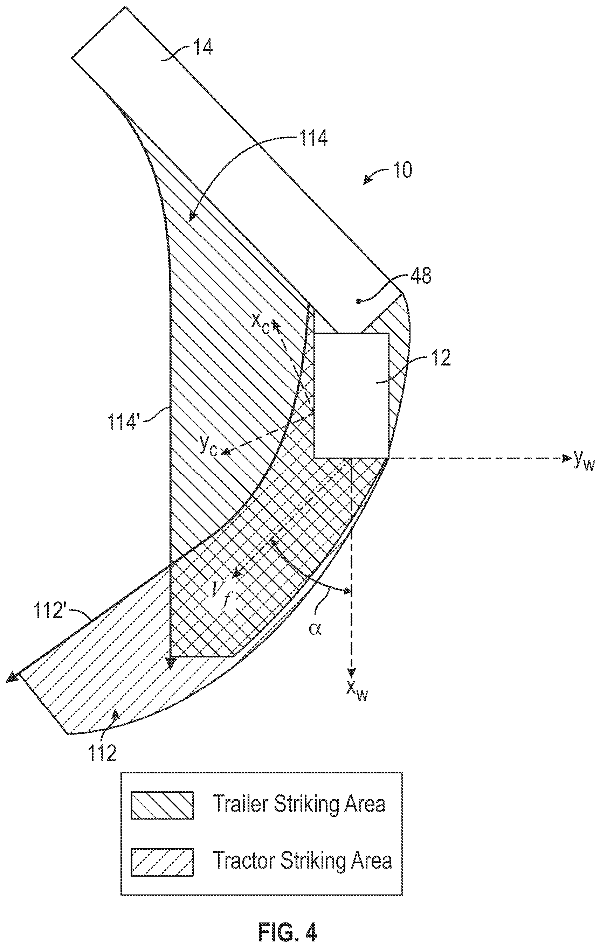

The disclosed kinematics model is provided by a first bicycle model with Ackerman steering indicative of a predicted tractor path (112 in Fig. 4). A second bicycle model is connected to the first bicycle model by the hitch point 48, where the second bicycle model is indicative of a predicted trailer path (114 in Fig. 4). The path of the inside tractor and trailer wheels are respectively shown at 112', 114' at the inner boundary of their respective tractor and trailer paths 112, 114.

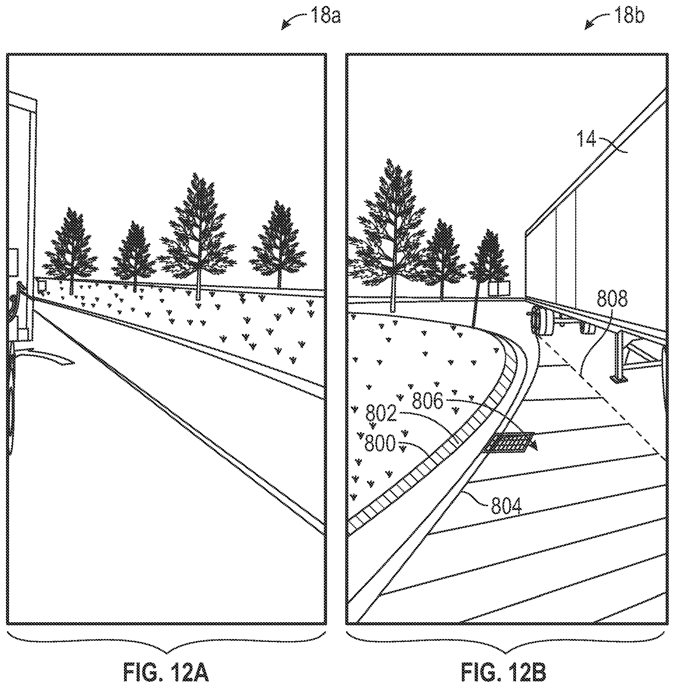

The kinematics module 104 receives current trailer angle, steering angle, and vehicle speed to calculate the predicted tractor and trailer paths 112, 114. If desired, one or both of the predicted tractor and trailer paths 112, 114 can be illustrated on one or more of the displays 18 as overlays (e.g., on at least one of the Class II and Class IV views) to assist the driver in maneuvering the vehicle 10 (e.g., Figs. 12A-13C and/or bird's eye view like Fig. 4). In one example, the kinematics algorithm is executed (i.e., calculated) continually while driving. In one example, the striking area is displayed when the trailer angle is larger than a certain threshold (e.g. 5 degrees or 10 degrees). This threshold may be tuned by the driver, if desired.

In one example operation, the CMS 15 utilizes the kinematics module 104 to predict a striking zone of the trailer 14 during a turn operation and generates a two dimensional overlay to digitally impose over at least one of the displayed Class II/IV images thereby showing the vehicle operator an expected striking zone of the trailer 14 and allowing the vehicle operator adjust the vehicle operations accordingly. The CMS 15 uses the received captured images from the cameras 20a, 20b, as well as any other cameras and vehicle operation data received from a general vehicle controller through a data connection, such as a CAN or LIN bus, to estimate a predicted position of the tractor and/or trailer side at each of multiple side positions and multiple points in time. These positions are converted to a geometric area encompassing all the positions. In this way, the shape and size of the geometric area is not fixed, but rather reflects an actual predicted striking area of the trailer.

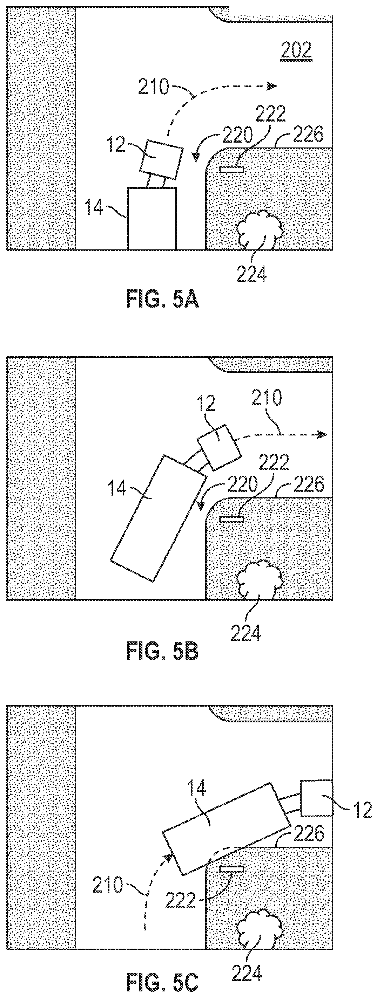

With continued reference to Figures 1A-2, Figures 5A, 5B, and 5C provide a scene 200 illustrating an example forward moving turn operation of a tractor 12 towing a trailer 14, with Figure 5A illustrating a start of the turn, Figure 5B illustrating the middle of the turn, and Figure 5C illustrating the end of the turn. The schematic tractor 12 and trailer 14 are schematic representations of the tractor 12 and trailer 14 illustrated in Figures 1A and 1B, however, the system and process for estimating the trailer striking area described herein can be incorporated in any similar tractor trailer configuration including a CMS 15 and the disclosure is not limited to the specific example environment. The disclosed system and method determine and display a tractor striking area as well as a trailer striking area, although only a tractor striking area is described below for simplicity and because the trailer 14 is typically the part of the vehicle 10 at greatest risk for colliding with an object.

In the illustrated turn sequence, the tractor 12 pulls the trailer 14 around a right turn in a road 202. The turn travels along a turn path 210, with the path 210 being directly controlled by the steering angle of the tractor 12. As the vehicle 10 (including the tractor 12 and the trailer 14) travels along the turn path 210, the trailer 14, and particularly an inside side 14' of the trailer 14 cuts toward the inside of the turn, with the trailer 14 crossing over portions of the road, and the adjacent ground 220 that the tractor 12 did not pass over. The portions of the area inside the turn that the trailer 14 passes through are referred to as the "striking area", as objects positioned in the striking area will be struck by the side 14' of the trailer 14 if they are tall enough, and are prone to be struck by tires, or pass under the trailer 14 if they are not tall enough to be struck by the side 14'.

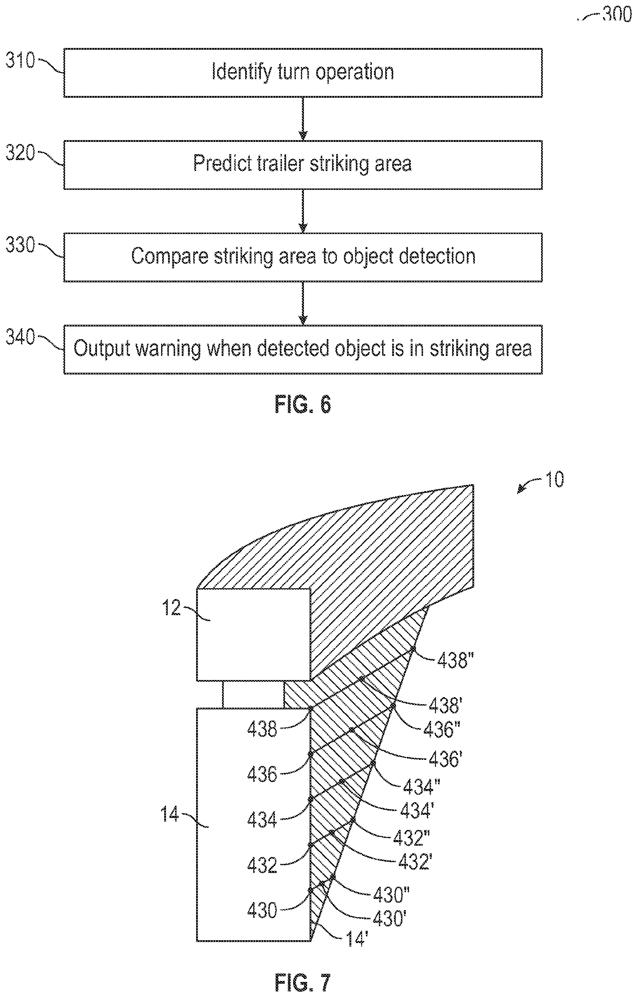

In order to avoid accidental strikes, the striking area prediction system uses the vehicle data (e.g. steering angle, steering rate, trailer angle, vehicle speed, trailer wheelbase, tractor wheelbase, hitch point location, yaw rate and the like) to generate a predicted striking zone over time using a process 300 illustrated in Figure 6. The predicted striking zone is a prediction of the path the trailer will take over the course of the turn and is re-calculated continuously as the turn progresses.

The process initially identifies that a turning operation is occurring in an "Identify Turn Operation" step 310. The turn operation can be automatically identified by detecting a steering angle change, a geospatially detected vehicle route direction change, a combination of the two, or a manual turn start input from the vehicle operator.

Once the turn is identified, the trailer striking area prediction system 40 determines an expected striking area in a "Predict Trailer Striking Area" step 320. The striking area prediction is the zone extending away from the side of the trailer 14 that the trailer 14 will pass through as the vehicle 10 completes the turn. In some examples, the prediction is based on a snapshot of the current steering angle speed and other vehicle parameters. In other examples, a change in steering angle over time is used rather than an instantaneous steering angle. Similarly, in other examples, one or more additional vehicle parameters may be overtime values rather than instantaneous snapshots. In another example, known, knowable, or detectable external factors (e.g., road conditions, road grade, weather conditions, and the like) are further incorporated into the prediction process.

In addition to predicting the striking area, the process 300 either identifies objects (e.g., sign 222, tree 224, and curb 226) within received images or another system within the CMS 15 in communication with the trailer striking area prediction system 40 provides object identifications to the trailer striking area prediction system 40. An overlay may be depicted on the display 18 over the curb to improve visibility to the driver (Fig. 12B). After receiving the object identifications, the process 300 compares the location of the identified objects 222, 224, 226 with the estimated striking area in a "Compare Striking Area to Object Detection" step 330. When the object 222, 224, 226 intersects with the estimated striking area, the process 300 outputs a warning to the vehicle operator in an "Output Warning When Detected Object is in Striking Area" step 340. The warning can either be an audio output and/or visual output that alerts the vehicle operator of a potential collision. As the process is predictive in nature, the alert allows the vehicle operator to adjust the turn operation to avoid the expected collision, and the system automatically updates the predicted striking zone to compensate for the correction.

With continued reference to the overall process of Figure 6, Figures 7 and 8 illustrate the detailed process for generating the estimated striking zone 410. As described above, initially the prediction system 40 receives the trailer angle and trailer end detection in a "Receive Trailer Angle and Trailer End Detection" step 510. The trailer angle and end detection can be performed using any conventional detection including image based detections, sensor based detections, and/or any other existing detection system(s).

The trailer angle and trailer end information are then usedby the CMS controller to identify multiple detection points or positions along the inside edge 14' of the trailer 14 in a "Define Detection Points Along Trailer in 3D" step 520. As used herein, "3D" refers to positioning in three dimensional real space relative to the trailer and "2D" refers to a position on an image frame along a two dimensional (E.G., X-Y) axis. Existing systems, and particularly systems within vehicle camera monitor arts can utilize any number of established processes or methodologies to convert a 3D position to a 2D position of a given camera view.

The multiple detection points 430-438 are distributed along the side 14' of the trailer 14 inside the turn. In the illustrated example, the detection points 430-438 are evenly distributed along the side 14'. In alternate examples, an even distribution may not be required and the detection points 430-438 can be concentrated near the endpoint (trailer endpoint 430) with the detection points near the tractor end being spread farther apart. In one example a fixed number (e.g., five) of detection points are used and the points are distributed across the side 14'. In another example, the number of detection points 430-438 is determined based on the length of the trailer and a desired distribution of the detection points.

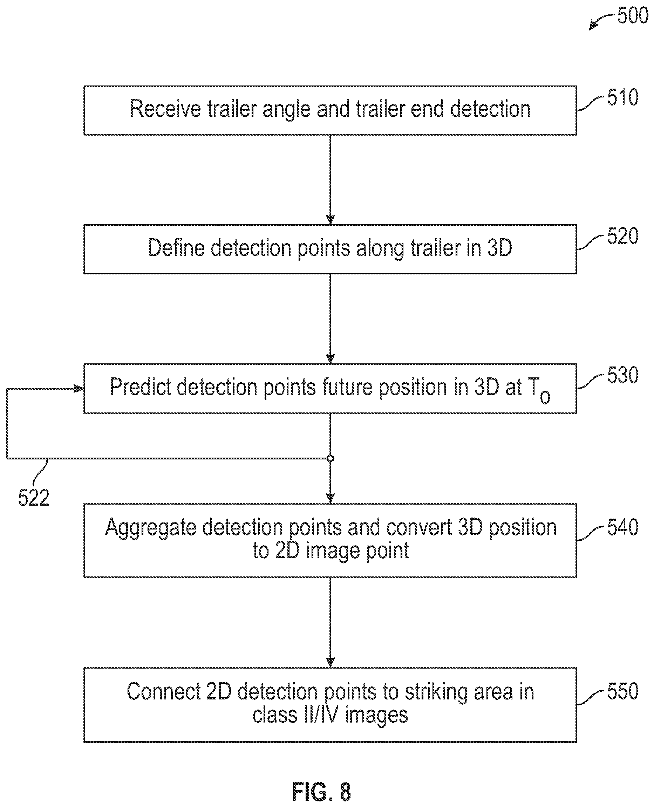

After defining the initial detection points 430-438 along the side of the trailer 14, the striking area prediction system 40 applies the steering angle, trailer angle, rate of change of trailer angle, vehicle speed, yawrate, and/or any similar parameters known by the CMS 15 to a kinematic model to predict a three dimensional position of each detection point at a future time (t1) a predetermined duration in the future (e.g. 1 second) in a "Predict Detection Points Future Position in 3D" step 530. Each predicted point at t1 is stored, and the step 520 is reiterated 522 using the t1 position of the detection point 430'-438' as the starting point, and generating a new predicted position of the detection point 430"-438" at t2. In the illustrated example of Figures 7 and 8, the prediction is iterated twice generating two predicted future positions (t1, t2). It is appreciated that in alternative examples, the number of iterations can be increased when a longer duration prediction is required. Similarly, the number of iterations can be increased with a shorter duration between prediction points (e.g., t0 to t1, t1 to t2 etc.) resulting in a greater number of prediction points generating the geometry of the predicted striking area.

After iterating 522, the process aggregates the detection points 430-438 and converts the 3D positions of the prediction points into two dimensional positions within an image plane of a Class II/IV image to which the overlay is being applied in a 'Aggregate Detection Points and Convert 3D Position to 2D Image Point" step 540. After converting the image points to two dimensional image points, the aggregated image points are converted into a striking area 410 by defining a bound in the 2D space including all predicted positions 430-438 from t0 through tn in a "Convert 2D Detection Points to Striking Area in Class II/IV images" step 550. The bound is defined as the minimum space required to include all predicted positions 430-438. The striking area 410 is then aligned with the side of the truck in the Class II/IV images and shaded as an overlay.

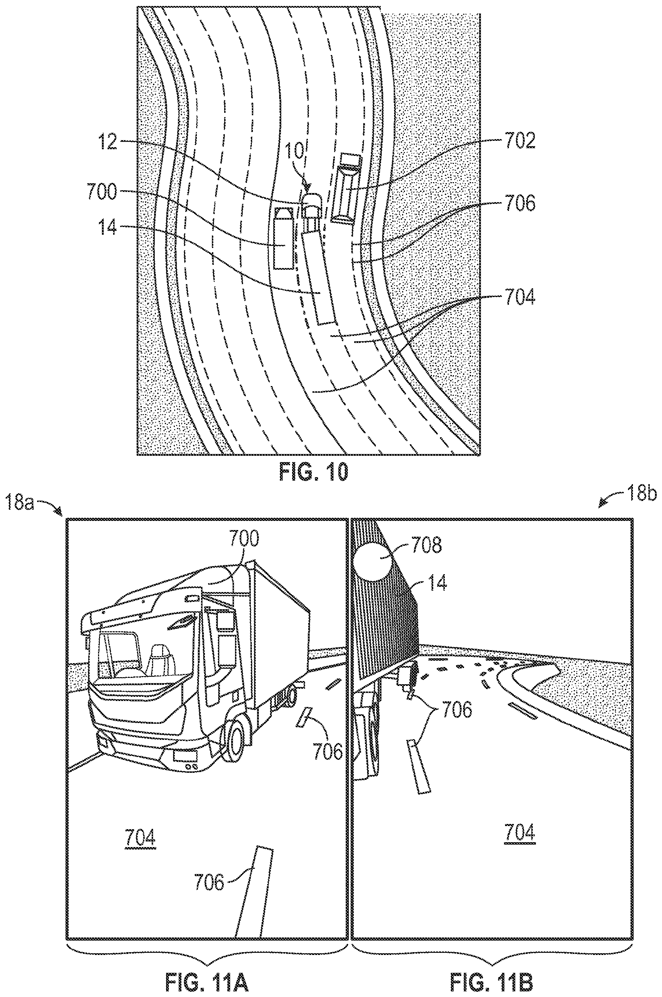

The trailer striking area is also useful in a potential "curve cut" scenario when the vehicle 10 is traveling down a curved roadway in traffic (Fig. 10) with other vehicles 700, 702. In a curvy road, it becomes more likely for the trailer end to cross the lane markers 706 indicating boundaries to adjacent lanes 704, creating a potentially dangerous situation. To address this, the CMS 15 utilizes the lane detection module 100 to determine a lane boundary for the vehicle 10, the trailer end detection module 102 to determine a trailer boundary, and the collision alert module 110 to determine an imminent intersection between the trailer boundary and the lane boundary. The trailer striking area prediction module 106 can be used to predict the trailers future striking area to anticipate the imminent intersection. If striking area is to be used for the purpose of determining the trailer curve cut, then the kinematic model used may be different than the one used to calculate trailer angle. The trailer striking kinematic model uses the trailer angle as an input along with the other signals mentioned. But if only the final wheel location/trailer end needs to be checked against lane marking instantaneously, then the kinematic model used to calculate trailer angle may be sufficient. The alert may be based upon time to cross and/or time to collision. The alert is output on different levels based on the severity level.

Example driver and passenger displays 18a, 18b are shown in Figures 11A and 11B. The vehicle 10 and its trailer 14 (and trailer end) is moving in a direction of the vehicle 702, which is on an inside lane 704, to where the lane boundary (markers 706) will become cut. An alert 708 is overlayed on the display 18b on which the curve cut is about to occur. The alert 708, which may be accompanied by an audible alert, is provided in a prominent color (perhaps flashing) and does not obstruct the lanes 704. The alert 708 encourages the driver to pay attention to trailer's location and momentum.

The overlay is continuously updated, as the process is iterated, thereby allowing the striking area overlay to be accurate throughout the vehicle turn. In one example, the overlay includes a first overlay on the displayed image corresponding to a first region encompassing a predicted trailer path relative to a current trailer position, the first overlay including a first boundary provided by a first curved line indicative of an inside trailer path and a trailer striking area from the first boundary to the trailer. In another example, the overlay includes a second overlay on the displayed image corresponding to a second region encompassing a predicted tractor path relative to a current tractor position, the first overlay including a second boundary provided by a second curved line indicative of an inside tractor path and a tractor striking area from the second boundary to the tractor.

Example overlays are illustrated in Figures 12A-13C. Figures 12A (outer turn radius) and 12B (inner turn radius) respectively depict the driver and passenger side displays 18a, 18b during a turning maneuver similar to the one shown in Figure 5C. The overlay representing the trailer striking area includes a first boundary 804 provided by curved line indicative of an inside trailer path. The trailer striking area 806 extends from the first boundary 804 to the trailer 14, particularly to a second boundary 808, for example, a straight line projected from the side of the trailer 14 to the ground. In the example shown in Figure 12B, the trailer striking area 806 is crosshatched to provide improved visibility of the striking area to the drive and permit the captured image to still be visible. An overlay 802 may be provided on the curb 800, if desired, in a contrasting color to the trailer striking overlay.

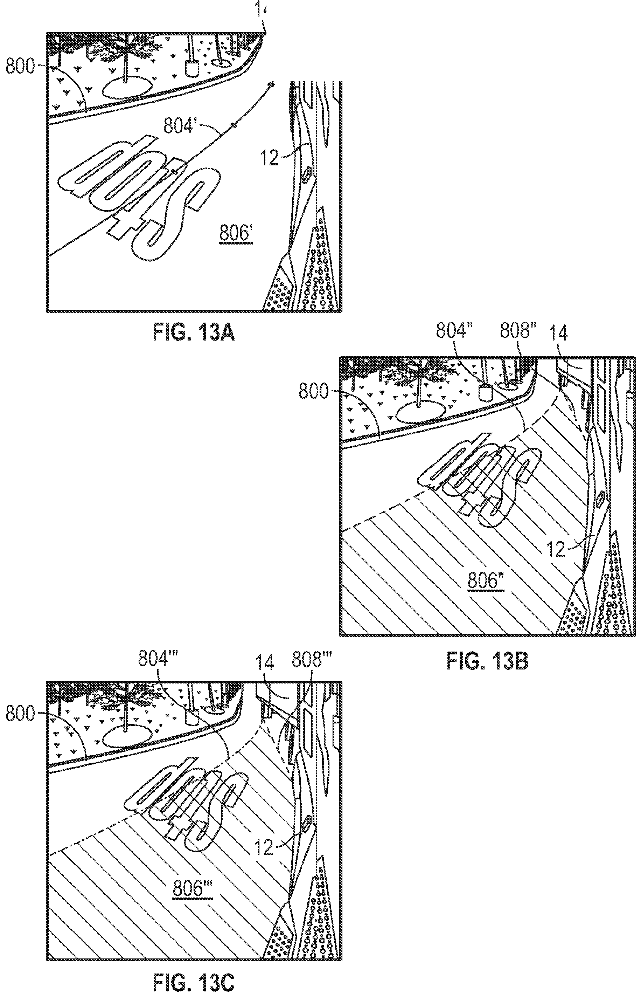

Additional example striking area overlays are shown in Figures 13A-13C, which may be available to the driver from a display customization menu. In the example in Figure 13A, the first boundary 804' is delineated with a colored line and the trailer striking area 806' has only the captured image with no overlay. In the example in Figure 13B, the first boundary 804" is delineated with a different colored line and the trailer striking area 806", and the trailer striking area 806" is shaded with a prominent shaded region and bounded by the first boundary 806" and the second boundary 808". In the example in Figure 13C, the first boundary 804‴ is delineated with a darker colored line and the trailer striking area 806"', and the trailer striking area 806" is lightly shaded and bounded by the first boundary 806‴ and the second boundary 808"'. Other display schemes may be used that shown.

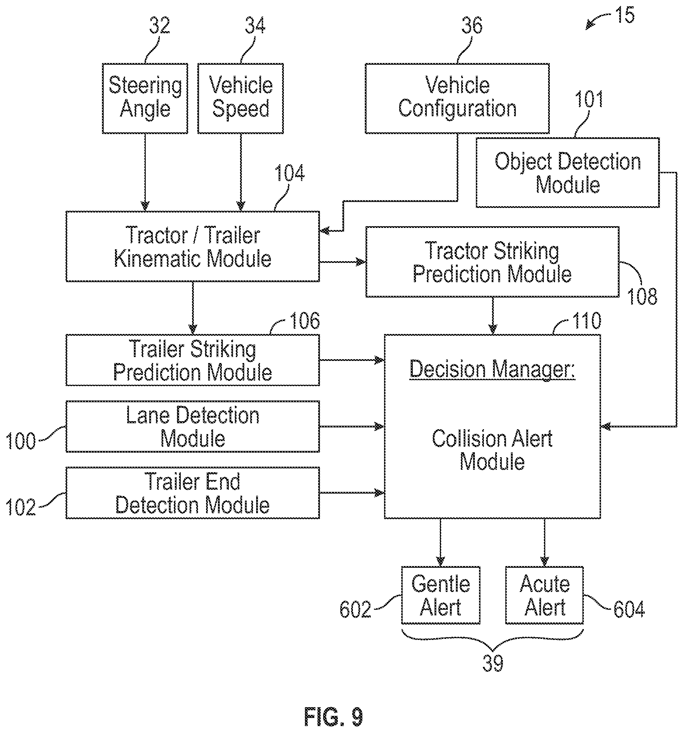

The CMS 15 includes a Decision Manager or Collision Alert Module 110, shown in Figure 9, which communicates with the modules 101-108 to evaluate the proximity between the predicted tractor and/or trailer paths 112, 114 (i.e., the tractor and trailer striking areas) and one or more objects (e.g., predicting an imminent curb strike, curve cut, object collision etc.). The decision manager considers the estimated time to the event, severity (what the object is), closing rate between objects, etc. The decision manager outputs a gentle alert 602 or an acute alert 604 via one or more output devices 39. In the example of a displayed alert (e.g., overlayed indicium), the severity may be communicated to the driver based upon flash rate of the indicium, or a color change of the indicium. In the example of an audible alert, sound level or pattern may be changed based upon severity.

While described above in relation to a commercial tractor pulling a trailer, it is appreciated that the wide turn requirement is present in any similar vehicle. As such, the features, systems and apparatuses of the invention described herein are applicable to any similar vehicle configurations falling under the scope of the claims and are not limited to commercial tractor trailer configurations.

Although an example embodiment has been disclosed, a worker of ordinary skill in this art would recognize that certain modifications would come within the scope of the claims. For that reason, the following claims should be studied to determine their true scope and content.

## Claims

1. A camera monitor system, CMS, (15) for a vehicle, comprising:
at least one rear-facing camera (20) mounted to a tractor (12) of the vehicle or a trailer (14) of the vehicle, configured to provide at least one captured image of at least one field of view (FOV_{EX1}, FOV_{EX2}) including at least a portion of the trailer;
a display (18) in communication with the camera and configured to depict a displayed image comprising at least a portion of the captured image; and
a controller (30) in communication with the camera and the display, the controller comprising:
a lane detection module (100) configured to determine a lane boundary (704) for the vehicle, the lane detection module including an algorithm configured to identify a lane marking (706) in a roadway, the at least one captured image including the lane marking,
a trailer detection module (101) configured to determine a trailer boundary (804, 804', 804", 804"'), the trailer detection module including an object detection algorithm configured to detect the trailer in the at least one captured image, and the trailer boundary being based upon a trailer feature detected by the object detection algorithm, and
a collision alert module (110) configured to determine an imminent intersection between the trailer boundary and the lane boundary and provide an alert (708) in response thereto, the alert being provided by an overlay depicted on the display.

2. The CMS (15) of claim 1, wherein the overlay is configured to increase in intensity based upon a severity level.

3. The CMS (15) of claim 2, wherein the overlay is an indicium, and the severity level dictates a flash rate of the indicium.

4. The CMS (15) of claim 2, wherein the overlay is an indicium, and the severity level dictates a color of the indicium.

5. The CMS (15) of claim 2, wherein the severity level is based upon at least one of a time until the imminent intersection and a time until a collision with a vehicle in an adjoining lane of the vehicle.

6. The CMS (15) of claim 1, wherein the lane marking identification algorithm is configured to determine the lane marking (706) by filtering a color of the lane marking from a surrounding portion of the captured image.

7. The CMS (15) of claim 1, wherein the controller (30) includes a kinematic module (104) including a bicycle model indicative of a trailer predicted path (114, 114'), wherein the trailer detection module (101) determines the trailer boundary (804, 804', 804", 804‴) based upon the trailer predicted path.

8. The CMS (15) of claim 7, wherein the bicycle model is a second bicycle model, and the controller (30) includes a first bicycle model indicative of a tractor predicted path (112, 112'), the second bicycle model being connected to the first bicycle model by a hitch point (48), and the first bicycle model including Ackerman steering,
optionally wherein the controller is configured to receive a steering angle (32) and a vehicle speed (34), and the trailer predicted path (114, 114') is based upon the steering angle and the vehicle speed.

9. The CMS (15) of claim 1, wherein the trailer feature is at least one trailer wheel (44).

10. The CMS (15) of claim 1, wherein the trailer feature is at least one trailer edge line (14').

11. A method (300) of monitoring a trailer (14) of a vehicle (10), comprising:
capturing at least one captured image of at least one field of view (FOV_{EX1}, FOV_{EX2}) with at least one rear-facing camera (20) mounted to the trailer or a tractor (12) of the vehicle, the at least one field of view including at least a portion of the trailer,
displaying at least a portion of the at least one captured image;
detecting a lane boundary (704) for the vehicle, including identifying a lane marking (706) in a roadway, the at least one captured image including the lane marking;
determining a trailer boundary (804, 804', 804", 804‴) for the trailer by detecting the trailer in the at least one captured image, and the trailer boundary is based upon a trailer feature identified by an object detection algorithm; and
outputting (340) an alert relating to an imminent intersection between the trailer boundary and the lane boundary, the alert being provided by an overlay depicted on a display (18).

12. The method (300) of claim 11, wherein the overlay is configured to increase in intensity based upon a severity level, and wherein the severity level is based upon at least one of a time until the imminent intersection and a time until a collision with a vehicle in an adjoining lane of the vehicle (10).

13. The method (300) of claim 11, wherein the identifying is performed by at least one of filtering a color of the lane marking (706) and deep learning from a surrounding portion of the captured image.

14. The method (300) of claim 11, wherein the trailer boundary (804, 804', 804", 804‴) detecting step includes using a kinematics model (104) with a first bicycle model indicative of a tractor predicted path (112, 112'), a second bicycle model is connected to the first bicycle model by a hitch point (48), the first bicycle model includes Ackerman steering, the second bicycle model is indicative of the trailer predicted path (114, 114'), the kinematics model is configured to receive a steering angle (32) and a vehicle speed (34), and the trailer predicted path is based upon the steering angle and the vehicle speed.

15. The method (300) of claim 11, wherein the trailer feature includes at least one of at least one trailer wheel (44) and at least one trailer edge line (14').

## Patentansprüche

1. Kameraüberwachungssystem, CMS, (15) für ein Fahrzeug, umfassend:
mindestens eine nach hinten gerichtete Kamera (20), die an einer Zugmaschine (12) des Fahrzeugs oder an einem Anhänger (14) des Fahrzeugs montiert ist und so konfiguriert ist, dass sie mindestens ein aufgenommenes Bild von mindestens einem Sichtfeld (FOV_{EX1}, FOV_{EX2}) bereitstellt, das mindestens einen Abschnitt des Anhängers einschließt;
eine Anzeige (18), die mit der Kamera in Kommunikation steht und so konfiguriert ist, dass sie ein angezeigtes Bild darstellt, das mindestens einen Abschnitt des aufgenommenen Bildes umfasst; und
eine Steuereinheit (30), die mit der Kamera und der Anzeige in Kommunikation steht, wobei die Steuereinheit Folgendes umfasst:
ein Fahrspurerkennungsmodul (100), das so konfiguriert ist, dass es eine Fahrspurbegrenzung (704) für das Fahrzeug bestimmt, wobei das Fahrspurerkennungsmodul einen Algorithmus einschließt, der so konfiguriert ist, dass er eine Fahrspurmarkierung (706) auf einer Fahrbahn identifiziert, wobei das mindestens eine aufgenommene Bild die Fahrspurmarkierung einschließt,
ein Anhängererkennungsmodul (101), das so konfiguriert ist, dass es eine Anhängergrenze (804, 804', 804", 804"') bestimmt, wobei das Anhängererkennungsmodul einen Objekterkennungsalgorithmus einschließt, der so konfiguriert ist, dass er den Anhänger in dem mindestens einen aufgenommenen Bild erkennt, und wobei die Anhängergrenze auf einem vom Objekterkennungsalgorithmus erkannten Anhängermerkmal basiert, und
ein Kollisionswarnmodul (110), das so konfiguriert ist, dass es eine unmittelbar bevorstehende Überschneidung zwischen der Anhängergrenze und der Fahrspurgrenze erkennt und als Reaktion darauf eine Warnung (708) bereitgestellt, wobei die Warnung durch eine auf der Anzeige dargestellte Einblendung bereitgestellt wird.

2. CMS (15) nach Anspruch 1, wobei die Einblendung so konfiguriert ist, dass sie die Intensität basierend auf einem Schweregrad erhöht.

3. CMS (15) nach Anspruch 2, wobei es sich bei der Einblendung um einen Hinweis handelt und der Schweregrad eine Blinkgeschwindigkeit des Hinweises vorgibt.

4. CMS (15) nach Anspruch 2, wobei die Einblendung ein Hinweis ist und der Schweregrad eine Farbe des Hinweises vorgibt.

5. CMS (15) nach Anspruchs 2, wobei der Schweregrad auf mindestens einem von einer Zeit bis zu der unmittelbar bevorstehenden Überschneidung und einer Zeit bis zu einer Kollision mit einem Fahrzeug auf einer angrenzenden Fahrspur des Fahrzeugs basiert.

6. CMS (15) nach Anspruch 1, wobei der Algorithmus zur Fahrbahnmarkierungsidentifizierung so konfiguriert ist, dass er die Fahrbahnmarkierung (706) durch Filtern einer Farbe der Fahrbahnmarkierung aus einem umgebenden Abschnitt des aufgenommenen Bildes bestimmt.

7. CMS (15) nach Anspruch 1, wobei die Steuereinheit (30) ein kinematisches Modul (104) einschließt, das ein Fahrradmodell einschließt, das einen vorhergesagten Anhängerweg (114, 114') anzeigt, wobei das Anhängererkennungsmodul (101) die Anhängergrenze (804, 804', 804", 804"') basierend auf dem vorhergesagten Anhängerweg bestimmt.

8. CMS (15) nach Anspruch 7, wobei es sich bei dem Fahrradmodell um ein zweites Fahrradmodell handelt und die Steuereinheit (30) ein erstes Fahrradmodell einschließt, das einen vorhergesagten Zugmaschinenweg (112, 112') anzeigt, wobei das zweite Fahrradmodell über einen Kupplungspunkt (48) mit dem ersten Fahrradmodell verbunden ist und das erste Fahrradmodell eine Ackermann-Lenkung einschließt,
optional wobei die Steuereinheit so konfiguriert ist, dass sie einen Lenkwinkel (32) und eine Fahrzeuggeschwindigkeit (34) empfängt und der vorhergesagte Anhängerweg (114, 114') auf dem Lenkwinkel und der Fahrzeuggeschwindigkeit basiert.

9. CMS (15) nach Anspruch 1, wobei das Anhängermerkmal mindestens ein Anhängerrad (44) ist.

10. CMS (15) nach Anspruch 1, wobei das Anhängermerkmal mindestens eine Anhängerkantenlinie (14') ist.

11. Verfahren (300) zur Überwachung eines Anhängers (14) eines Fahrzeugs (10), umfassend:
Aufnehmen von mindestens einem aufgenommenen Bild von mindestens einem Sichtfeld (FOV_{EX1} , FOV_{EX2}) mit mindestens einer nach hinten gerichteten Kamera (20), die am Anhänger oder an einer Zugmaschine (12) des Fahrzeugs montiert ist, wobei das Sichtfeld mindestens einen Abschnitt des Anhängers einschließt;
Anzeigen mindestens eines Abschnitts des mindestens einen aufgenommenen Bildes;
Erkennen einer Fahrbahnbegrenzung (704) für das Fahrzeug, einschließlich Identifizieren einer Fahrbahnmarkierung (706) auf einer Fahrbahn, wobei das mindestens eine aufgenommene Bild die Fahrbahnmarkierung einschließt;
Bestimmen einer Anhängergrenze (804, 804', 804", 804") für den Anhänger durch Erkennen des Anhängers in dem mindestens einen aufgenommenen Bild, und wobei die Anhängergrenze auf einem Anhängermerkmal basiert, das durch einen Objekterkennungsalgorithmus identifiziert wurde; und
Ausgeben (340) einer Warnung in Bezug auf eine unmittelbar bevorstehende Überschneidung zwischen der Anhängergrenze und der Fahrspurgrenze, wobei die Warnung durch eine Einblendung auf einer Anzeige (18) bereitgestellt wird.

12. Verfahren (300) nach Anspruch 11, wobei die Einblendung so konfiguriert ist, dass sie die Intensität basierend auf einem Schweregrad erhöht, und wobei der Schweregrad auf mindestens einem von einer Zeit bis zu der unmittelbar bevorstehenden Überschneidung und einer Zeit bis zu einer Kollision mit einem Fahrzeug auf einer angrenzenden Fahrspur des Fahrzeugs (10) basiert.

13. Verfahren (300) nach Anspruch 11, wobei das Identifizieren durch mindestens eines durchgeführt wird von Filtern einer Farbe der Fahrbahnmarkierung (706) und Deep Learning aus einem umgebenden Abschnitt des aufgenommenen Bildes.

14. Verfahren (300) nach Anspruch 11, wobei der Schritt zur Erkennung der Anhängergrenze (804, 804', 804", 804"') Verwenden eines Kinematikmodells (104) mit einem ersten Fahrradmodell einschließt, das einen vorhergesagten Zugmaschinenweg (112, 112') anzeigt, wobei ein zweites Fahrradmodell über einen Kupplungspunkt (48) mit dem ersten Fahrradmodell verbunden ist, das erste Fahrradmodell eine Ackermann-Lenkung einschließt, das zweite Fahrradmodell den vorhergesagten Anhängerweg (114, 114') anzeigt, das Kinematikmodell so konfiguriert ist, dass es einen Lenkwinkel (32) und eine Fahrzeuggeschwindigkeit (34) empfängt und der vorhergesagte Anhängerweg auf dem Lenkwinkel und der Fahrzeuggeschwindigkeit basiert.

15. Verfahren (300) nach Anspruch 11, wobei das Anhängermerkmal mindestens eines von einem Anhängerrad (44) und mindestens einer Anhängerkantenlinie (14') einschließt.

## Revendications

1. Système de surveillance par caméra, CMS (15) pour un véhicule, comprenant :
au moins une caméra arrière (20) montée sur un tracteur (12) du véhicule ou sur une remorque (14) du véhicule, configurée pour fournir au moins une image capturée d'au moins un champ de vision (FOV_{EX1}, FOV_{EX2}) incluant au moins une portion de la remorque ;
un affichage (18) en communication avec la caméra et configuré pour représenter une image affichée comprenant au moins une portion de l'image capturée ; et
un dispositif de commande (30) en communication avec la caméra et l'affichage, le dispositif de commande comprenant :
un module de détection de voie (100) configuré pour déterminer une limite de voie (704) pour le véhicule, le module de détection de voie incluant un algorithme configuré pour identifier un marquage de voie (706) sur une chaussée, la au moins une image capturée incluant le marquage de voie,
un module de détection de remorque (101) configuré pour déterminer une limite de remorque (804, 804', 804", 804"'), le module de détection de remorque incluant un algorithme de détection d'objet configuré pour détecter la remorque dans la au moins une image capturée, et la limite de remorque étant basée sur une caractéristique de remorque détectée par l'algorithme de détection d'objet, et
un module d'alerte de collision (110) configuré pour déterminer une intersection imminente entre la limite de remorque et la limite de voie et fournir une alerte (708) en réponse à celle-ci, l'alerte étant fournie par une incrustation affichée sur l'affichage.

2. CMS (15) selon la revendication 1, dans lequel l'incrustation est configurée pour augmenter en intensité sur la base d'un niveau de gravité.

3. CMS (15) selon la revendication 2, dans lequel l'incrustation est un indice, et le niveau de gravité dicte une fréquence de clignotement de l'indice.

4. CMS (15) selon la revendication 2, dans lequel l'incrustation est un indice, et le niveau de gravité dicte une couleur de l'indice.

5. CMS (15) selon la revendication 2, dans lequel le niveau de gravité est basé sur au moins l'un parmi un temps jusqu'à l'intersection imminente et un temps jusqu'à une collision avec un véhicule dans une voie adjacente au véhicule.

6. CMS (15) selon la revendication 1, dans lequel l'algorithme d'identification de marquage de voie est configuré pour déterminer le marquage de voie (706) en filtrant une couleur du marquage de voie à partir d'une portion environnante de l'image capturée.

7. CMS (15) selon la revendication 1, dans lequel le dispositif de commande (30) inclut un module cinématique (104) incluant un modèle bicyclette indicatif d'une trajectoire prédite de remorque (114, 114'), dans lequel le module de détection de remorque (101) détermine la limite de remorque (804, 804', 804", 804"') sur la base de la trajectoire prédite de remorque.

8. CMS (15) selon la revendication 7, dans lequel le modèle bicyclette est un second modèle bicyclette, et le dispositif de commande (30) inclut un premier modèle bicyclette indicatif d'une trajectoire prédite de tracteur (112, 112'), le second modèle bicyclette étant relié au premier modèle bicyclette par un point d'attelage (48), et le premier modèle bicyclette incluant une direction d'Ackermann,
facultativement dans lequel le dispositif de commande est configuré pour recevoir un angle de braquage (32) et une vitesse de véhicule (34), et la trajectoire prédite de remorque (114, 114') est basée sur l'angle de braquage et la vitesse de véhicule.

9. CMS (15) selon la revendication 1, dans lequel la caractéristique de remorque est au moins une roue de remorque (44).

10. CMS (15) selon la revendication 1, dans lequel la caractéristique de remorque est au moins une ligne de bord de remorque (14').

11. Procédé (300) de surveillance d'une remorque (14) d'un véhicule (10), comprenant :
la capture d'au moins une image capturée d'au moins un champ de vision (FOV_{EX1} , FOV_{EX2}) avec au moins une caméra arrière (20) montée sur la remorque ou un tracteur (12) du véhicule, le au moins un champ de vision incluant au moins une portion de la remorque ;
l'affichage d'au moins une portion de la au moins une image capturée ;
la détection d'une limite de voie (704) pour le véhicule, incluant l'identification d'un marquage de voie (706) sur une chaussée, la au moins une image capturée incluant le marquage de voie ;
la détermination d'une limite de remorque (804, 804', 804", 804"') pour la remorque en détectant la remorque dans la au moins une image capturée, et la limite de remorque est basée sur une caractéristique de remorque identifiée par un algorithme de détection d'objet ; et
la délivrance en sortie (340) d'une alerte relative à une intersection imminente entre la limite de remorque et la limite de voie, l'alerte étant fournie par une incrustation représentée sur un affichage (18).

12. Procédé (300) selon la revendication 11, dans lequel l'incrustation est configurée pour augmenter en intensité sur la base d'un niveau de gravité, et dans lequel le niveau de gravité est basé sur au moins l'un parmi un temps jusqu'à l'intersection imminente et un temps jusqu'à une collision avec un véhicule dans une voie adjacente au véhicule (10).

13. Procédé (300) selon la revendication 11, dans lequel l'identification est effectuée par au moins l'un parmi le filtrage d'une couleur du marquage de voie (706) et l'apprentissage profond à partir d'une portion environnante de l'image capturée.

14. Procédé (300) selon la revendication 11, dans lequel l'étape de détection de limite de remorque (804, 804', 804", 804"') inclut l'utilisation d'un modèle cinématique (104) avec un premier modèle bicyclette indicatif d'une trajectoire prédite de tracteur (112, 112'), un second modèle bicyclette est relié au premier modèle bicyclette par un point d'attelage (48), le premier modèle bicyclette inclut une direction d'Ackermann, le second modèle bicyclette est indicatif de la trajectoire prédite de remorque (114, 114'), le modèle cinématique est configuré pour recevoir un angle de braquage (32) et une vitesse de véhicule (34), et la trajectoire prédite de remorque est basée sur l'angle de braquage et la vitesse de véhicule.

15. Procédé (300) selon la revendication 11, dans lequel la caractéristique de remorque inclut au moins l'une parmi au moins une roue de remorque (44) et au moins une ligne de bord de remorque (14').
